# EUROPEAN PATENT SPECIFICATION

(11) **EP 1 567 381 B1**
(45) Date of publication and mention of the grant of the patent: **05.03.2008**
(21) Application number: 03775662.4
(22) Date of filing: 01.12.2003
(51) Int. Cl.: B60J 10/00, B60J 10/04

(54) **SEALING, GUIDING AND TRIMMING STRIP ARRANGEMENTS AND METHODS OF MAKING THEM**
DICHTUNGS-FÜHRUNGS-UND RANDSTREIFENVORRICHTUNG UND DEREN HERSTELLUNGSVERFAHREN
AGENCEMENT D'ELEMENTS D'ETANCHEITE, DE GUIDAGE ET D'HABILLAGE ET LEURS PROCEDES DE FABRICATION

(30) Priority: 03.12.2002 GB 0228185
(43) Date of publication of application: 31.08.2005
(73) Proprietor: GenCorp Property Inc., Sacramento, CA 95853-7012 (US)
(72) Inventor: HOGE, Ralf, 42477 Radevormwald (DE)
(74) Representative: Foster, Mark Charles
(86) International application number: PCT/IB2003/005617
(87) International publication number: WO 2004/050407

(56) References cited:
- EP-A- 0 799 748
- GB-A- 2 046 338
- US-A- 3 851 432
- US-A- 4 165 119
- US-A- 4 401 340
- US-A- 5 470 422
- US-B1- 6 409 251

## Description

### Technical Field

The invention relates to sealing, trimming and guiding strip arrangements and methods of making them. Strip arrangements embodying the invention, to be described in more detail below by way of example only, can be used in motor vehicle body construction, such as for sealing, trimming and guiding purposes relating to vehicle windows and for roof drip rails and similar applications in vehicles.

US-B1-6409251 discloses a decorative part that is secured to a sealing strip by a layer of adhesive or double-sided tape located on the strip.

### Disclosure of Invention

According to the invention, there is provided a longitudinally extending sealing, trimming or guiding arrangement as defined in claim 1.

According to the invention, there is also provided a method of forming a longitudinally extending sealing, trimming and guiding arrangement on a mount on a vehicle body as defined in claim 7.

### Brief Description of Drawings

A sealing, trimming and guiding strips embodying the invention will now be described, by way of example only, with reference to the accompanying diagrammatic drawings in which:
Figure 1 is a side view of a motor vehicle body incorporating such a strip; and
Figure 2 is a cross-section on the line II-II of Figure 1.

### Best Mode for Carrying Out The Invention

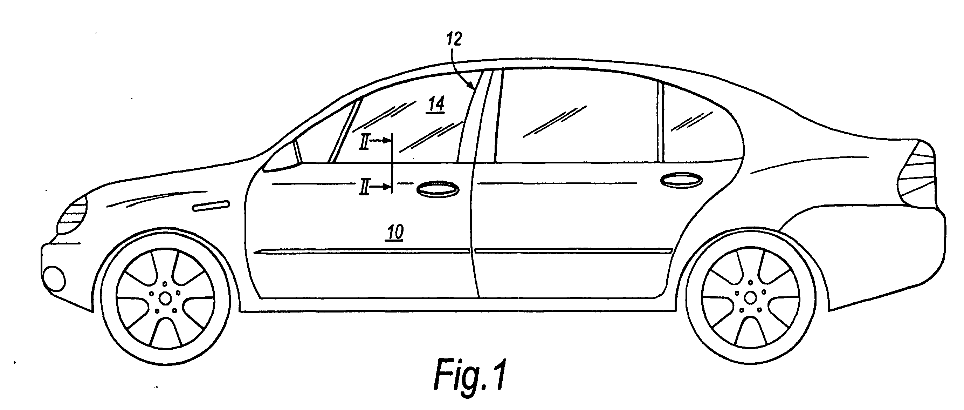

Figure 1 shows a motor vehicle having a front door 10 carrying a window frame indicated generally at 12 which receives and guides a pane of window glass which is slidable upwardly from and downwardly into the lower part of the door 10. In sliding from and into the lower part of the door 10, the window pane 14 slides through a gap (waist gap) defined by panels forming the inner and outer skins of the door. Sealing, trimming and guiding strips (waist belts) are mounted on each side of this gap and make sealing and guiding contact with the inner and outer surfaces of the window pane as it passes through the gap.

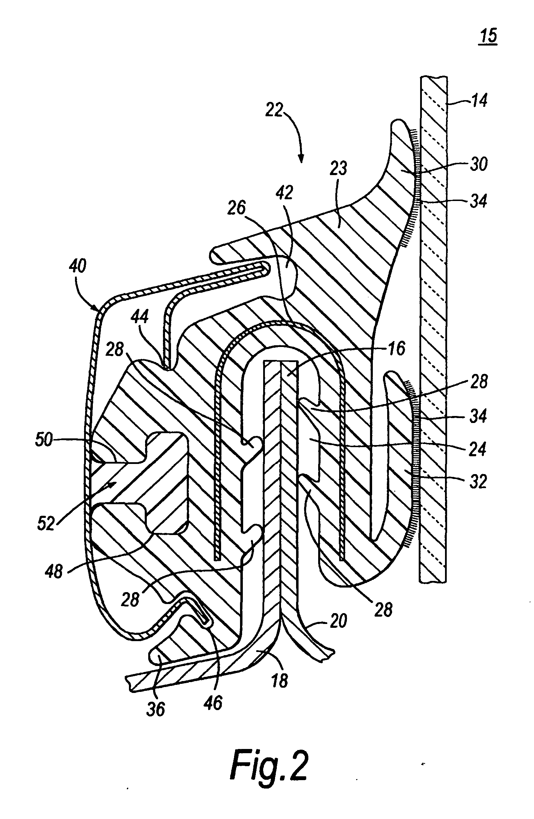

Figure 2 shows a cross-section through one of the waist belt strips, running along the outside of the waist gap 15.

As shown in Figure 2, a flange 16 is formed by door panels 18 and 20 on the outside of the door. A waist belt strip, indicated generally at 22, is mounted on the flange 16. The waist belt strip 22 is made of flexible material, such as plastics or rubber material, and is advantageously extruded. It is shaped to define a channel 24 which embracingly grips the flange 16 to mount the waist belt strip in position. The material defining the channel 24 is reinforced by a reinforcement or carrier 26 which is advantageously made of resilient metal and is of channel-shape to increase the gripping force of the waist belt strip on the flange 16. The carrier 26 may be made of unapertured channel-shape material. Instead, it may be provided with slits or slots to increase its resilience. It could be made of inverted U-shaped elements connected by integral connecting links or completely disconnected from each other. Instead, it could be made of looped wire. Other forms of carrier are possible.

The carrier 26 may be incorporated in the material of the waist belt strip 22 during the extrusion process, using a known cross-head extruder.

The flexible material defining the channel 24 is advantageously provided with integral inwardly extending lips 28 which increase the frictional grip of the strip 22 on the flange 16. Advantageously, the lips are made of softer material than the remainder of the material of the strip 22, so as to increase the frictional gripping force.

The waist belt strip 22 defines longitudinally extending lips 30,32 which are positioned to make contact with the outer surface of the window pane 14. The contacting surfaces of the lips 30 and 32 are covered with flock 34 or similar low friction material.

The material of the waist belt strip 22 also incorporates a longitudinally extending lip or foot 36 for sealing against part of the panel 18.

The panels of the door on the inside of the waist belt gap 15 define a flange (not shown) corresponding to the flange 16 and support a waist belt strip (also not shown) for making sealing and guiding contact with the inner surface of the window pane 14.

The waist belt strip 22 supports a longitudinally extending decorative part 40 which runs along the outermost surface of the waist belt strip 22 to improve the visual appearance of the waist belt strip. The decorative part 40 may be made of bright material, such as aluminium. As shown in Figure 2, the decorative part 40 is bent along an upper edge to be located within a channel 42 in the material of the waist belt strip 22, the material of the decorative part 40 being bent over on itself along this edge, the bent-over material having its distal edge located in a groove 44 in the material of the waist belt strip 22.

Along its lower edge, the material of the decorative part 40 is located in a further groove 46 in the waist belt strip 22.

In this way, the decorative part 40 is located on the outside surface of the waist belt strip 22. However, in order to hold the decorative part firmly in position, the outer part of the waist belt strip 22 is formed with a longitudinally extending channel 48 of generally rectangular cross-section but which is connected to the outer surface of the material of the waist belt strip 22 by a narrower slot or passageway 50 extending along the length of the channel 48. The channel 48 and the slots 50 are filled with bonding material, preferably polyurethane material, which adheres to the inner face of the decorative strip 40 and secures it firmly in position on the waist belt strip 22.

During manufacture of the waist belt strip 22, the decorative part 40 is mounted in position on the outer surface of the waist belt strip 22 with its upper and lower longitudinal edges located in the channel 42 and the grooves 44 and 46 as shown in Figure 2. Polyurethane bonding material 52 is then injected (or otherwise placed) into the channel 48 from one end of the waist belt strip so as to fill the channel and the slot 50 and to adhere to the decorative part 40 and thus to hold the part 40 firmly in position as the bonding material solidifies. In this way, the decorative part is firmly held in position on the waist belt strip 22.

In practice, the surface of the vehicle door 10 may be slightly curved in the horizontal plane - and thus the waist gap 15 and the flange 26 will be correspondingly curved in this plane. In such a case, therefore, the waist belt strip 22 is held in the required curved configuration during the manufacturing process, such as by a suitable jig, and the decorative part 40 is firmly secured to it by the polyurethane material 52 in the manner explained. The waist belt strip 22, with the decorative part 40 secured to it, is thus held in the required curved configuration and can be delivered to the vehicle manufacturer ready for mounting on the curved flange.

In a modification, the waist belt strip 22 is held in straight configuration and the decorative part 40 is firmly secured to it by the polyurethane bonding material 52 in the manner described. It is then delivered to the vehicle manufacturer in this form and can be gently bent during the process of assembling it onto the flange 16. Because the decorative part 40 is firmly secured to the material of the waist belt strip 22, such slight bending will not cause damage to the decorative strip.

The arrangement described is thus advantageous over arrangements in which the decorative part 40 is placed in position on the outside of the waist belt strip 22 after the latter has been placed on the flange 16, the decorative part 40 being secured in such a case to the waist belt strip 22 by adhesive.

Although the foregoing description has referred to the fitting of the decorative part 40 to a waist belt strip, the same process using the polyurethane material can be used to secure a decorative part onto other strips used in vehicle construction. For example, a decorative part like the part 40 can be secured in the manner described to a roof drip rail made of flexible material. Such a roof drip rail may have a longitudinally curved configuration similar to that described above for the waist belt strip 22.

## Claims

1. A longitudinally extending sealing, trimming or guiding arrangement, comprising a strip (22) made of flexible material, having a longitudinally extending decorative part (40) secured to an outside surface of said strip (22) by bonding material (52), **characterised in that** the bonding material (52) is located in a channel (48) formed below the said surface of the strip (22) but which extends to the surface. H

2. An arrangement according to claim 1, in which the bonding material (52) comprises polyurethane material.

3. An arrangement according to claim 1 or 2, adapted to be secured on a mount which is slightly curved in a longitudinally extending plane, wherein the longitudinally extending decorative part (40) is mounted on the outside surface and secured thereto with the bonding material (52) while the arrangement is bent to match the curvature of the mount.

4. An arrangement according to claim 1, 2 or 3, wherein the channel (48) comprises a longitudinally extending channel formed in the flexible material immediately below the said surface but communicating with the surface through a longitudinally extending passageway (50), the longitudinally extending channel and the passageway (50) being filled with the bonding material (52).

5. An arrangement according to claim 4, in which the bonding material (52) is placed into the longitudinally extending channel (48) from a longitudinal end thereof.

6. An arrangement according to claim 1, wherein the channel (48) comprises a longitudinally extending channel of generally rectangular cross-section but which is connected to the outside surface by a narrower slot or passageway (50) extending along the length of the longitudinally extending channel.

7. A method of forming a longitudinally extending sealing, trimming and guiding arrangement on a mount on a vehicle body, in which the arrangement comprises a strip (22) formed from longitudinally extending flexible material and shaped to be supported on the mount, in which a longitudinally extending decorative part (40) is secured to an outside surface of said strip (22) by means of longitudinally extending bonding material (52), **characterised in that** the longitudinally extending decorative part (40) is secured to the outside surface of said strip (22) before the arrangement is secured on the mount, and in which the arrangement with the decorative part (40) secured thereto is positioned onto the mount, and in which the arrangement defines a longitudinally extending channel (48) positioned immediately below the said surface of said strip (22) and connected to the surface by a longitudinally extending passageway (50), and including the step of injecting the bonding material (52) into a longitudinal end of the channel (48).

8. A method according to claim 7, in which the mount is curved in a longitudinally extending plane, and in which the decorative part (40) is secured to the outside surface of the strip (22) while the flexible material is held in a correspondingly curved configuration.

9. A method according to claim 7, in which the mount is curved in a longitudinally extending plane, and in which the step of positioning the arrangement, with the decorative part (40) secured thereto, onto the mount includes the step of manually bending the arrangement and the decorative part (40) thereon to match the said curve.

10. A method according to claim 7, 8 or 9, in which the bonding material (52) comprises polyurethane material.

11. A method according to claim 7, 8, 9 or 10, wherein the channel (48) comprises a longitudinally extending channel of generally rectangular cross-section but which is connected to the outside surface by a narrower slot or passageway (50) extending along the length of the longitudinally extending channel.

## Patentansprüche

1. Sich in Längsrichtung erstreckende Dichtungs-, Randstreifen- oder Führungsvorrichtung, enthaltend einen Streifen (22), der aus einem flexiblen Material besteht und einen sich in Längsrichtung erstreckenden Zierteil (40) aufweist, der an einer Außenseite des Streifens (22) mit Hilfe eines Klebematerials (52) befestigt ist, **dadurch gekennzeichnet, dass** sich das Klebematerial (52) in einem Kanal (48) befindet, der unter der Oberfläche des Streifens (22) ausgebildet ist, sich jedoch zur Oberfläche erstreckt.

2. Vorrichtung nach Anspruch 1, bei dem das Klebematerial (52) ein Polyurethanmaterial enthält.

3. Vorrichtung nach Anspruch 1 oder 2, die dazu eingerichtet ist, an einer Halterung angebracht zu werden, die in einer sich in Längsrichtung erstreckenden Ebene leicht gekrümmt ist, wobei der sich in Längsrichtung erstreckende Zierteil (40) an der Außenoberfläche angebracht und an dieser mit dem Klebematerial (52) befestigt ist, während die Vorrichtung gebogen ist, um mit der Krümmung der Halterung übereinzustimmen.

4. Vorrichtung nach Anspruch 1, 2 oder 3, wobei der Kanal (48) einen sich in Längsrichtung erstreckenden Kanal enthält, der im flexiblen Material unmittelbar unter der Oberfläche ausgebildet ist, jedoch mit der Oberfläche durch einen sich in Längsrichtung erstreckenden Durchgangsweg (50) verbunden ist, wobei der sich in Längsrichtung erstreckende Kanal und der Durchgangsweg (50) mit dem Klebematerial (52) gefüllt sind.

5. Vorrichtung nach Anspruch 4, bei dem das Klebematerial (52) in den sich in Längsrichtung erstreckenden Kanal (48) von einem längs verlaufenden Ende desselben eingebracht ist.

6. Vorrichtung nach Anspruch 1, bei dem der Kanal (48) einen in Längsrichtung verlaufenden Kanal eines im wesentlichen rechteckigen Querschnitts enthält, der jedoch mit der Außenoberfläche durch einen schmaleren Schlitz oder Durchgangsweg (50) verbunden ist, der sich mit der Länge des in Längsrichtung erstreckenden Kanals erstreckt.

7. Verfahren zum Ausbilden einer sich in Längsrichtung erstreckenden Dichtungs-, Randstreifen- oder Führungsvorrichtung auf einer Halterung an einem Fahrzeugkörper, wobei die Vorrichtung einen Streifen (22) enthält, der aus einem sich in Längsrichtung erstreckenden flexiblen Material ausgebildet ist und so geformt ist, dass er auf der Halterung gehalten ist, wobei ein sich in Längsrichtung erstreckender Zierteil (40) an einer Außenoberfläche der Streifens (22) mit Hilfe eines sich in Längsrichtung erstreckenden Klebematerials (52) befestigt wird, **dadurch gekennzeichnet, dass** der sich in Längsrichtung erstreckende Zierteil (40) an der Außenoberfläche des Streifens (22) angebracht wird, bevor die Vorrichtung an der Halterung angebracht wird, und die Vorrichtung mit dem daran befestigten Zierteil (40) auf der Halterung positioniert wird, und die Vorrichtung einen sich in Längsrichtung erstreckenden Kanal (48) aufweist, der sich unmittelbar unter der Oberfläche des Streifens (22) befindet und mit der Oberfläche durch einen sich in Längsrichtung erstreckenden Durchgangsweg (50) verbunden ist, und der Schritt des Einspritzens des Klebematerials (52) in ein längs verlaufendes Ende des Kanals (48) enthalten ist.

8. Verfahren nach Anspruch 7, bei dem die Halterung in einer sich in Längsrichtung erstreckenden Ebene gekrümmt ist und bei dem der Zierteil (40) an der Außenoberfläche des Streifens (22) befestigt wird, während das flexible Material in einer entsprechenden gekrümmten Anordnung gehalten wird.

9. Verfahren nach Anspruch 7, bei dem die Halterung in einer sich in Längsrichtung erstreckenden Ebene gekrümmt ist und bei dem der Schritt des Positionierens der Vorrichtung, mit dem daran befestigten Zierteil (40), an der Halterung den Schritt des manuellen Biegens der Vorrichtung und des darauf befindlichen Zierteils (40) beinhaltet, um mit der Krümmung übereinzustimmen.

10. Verfahren nach Anspruch 7, 8 oder 9, bei dem das Klebematerial (52) ein Polyurethanmaterial enthält.

11. Verfahren nach Anspruch 7, 8, 9 oder 10, bei dem der Kanal (48) einen sich in Längsrichtung erstreckenden Kanal eines im wesentlichen rechteckigen Querschnitts enthält, der jedoch mit der Außenoberfläche durch einen schmaleren Schlitz oder Durchgangsweg (50) verbunden ist, der sich entlang des sich in Längsrichtung erstreckenden Kanals erstreckt.

## Revendications

1. Agencement d'étanchéité, d'habillage ou de guidage s'étendant longitudinalement, comprenant une bande (22) fabriquée à partir d'un matériau flexible, présentant une partie décorative (40) s'étendant longitudinalement fixée à une surface extérieure de ladite bande (22) par un matériau collant (52), **caractérisé en ce que** le matériau collant (52) est situé dans un canal (48) formé au-dessous de ladite surface de la bande (22) mais qui s'étend jusqu'à la surface.

2. Agencement selon la revendication 1, dans lequel le matériau collant (52) comprend un matériau en polyuréthane.

3. Agencement selon la revendication 1 ou 2, adapté pour être fixé sur une monture qui est légèrement incurvée dans un plan s'étendant longitudinalement, dans lequel la partie décorative (40) s'étendant longitudinalement est montée sur la surface extérieure et fixée à celle-ci par le matériau collant (52) tandis que l'agencement est fléchi pour correspondre à la courbure de la monture.

4. Agencement selon la revendication 1, 2 ou 3, dans lequel le canal (48) comprend un canal s'étendant longitudinalement formé dans le matériau flexible immédiatement au-dessous de ladite surface mais communiquant avec la surface à travers un passage (50) s'étendant longitudinalement, le canal s'étendant longitudinalement et le passage (50) étant rempli du matériau collant (52).

5. Agencement selon la revendication 4, dans lequel le matériau collant (52) est placé à l'intérieur du canal (48) s'étendant longitudinalement depuis son extrémité longitudinale.

6. Agencement selon la revendication 1, dans lequel le canal (48) comprend un canal s'étendant longitudinalement à section transversale généralement rectangulaire mais qui est connecté à la surface extérieure par une fente ou un passage (50) plus étroit(e) s'étendant le long de la longueur du canal s'étendant longitudinalement.

7. Procédé de formation d'un agencement d'étanchéité, d'habillage et de guidage s'étendant longitudinalement sur une monture sur un corps de véhicule, dans lequel l'agencement comprend une bande (22) formée à partir d'un matériau flexible s'étendant longitudinalement et façonné pour être supporté sur la monture, dans lequel une partie décorative (40) s'étendant longitudinalement est fixée à une surface extérieure de ladite bande (22) au moyen d'un matériau collant (52) s'étendant longitudinalement, **caractérisé en ce que** la partie décorative (40) s'étendant longitudinalement est fixée à la surface extérieure de ladite bande (22) avant que l'agencement ait été fixé sur la monture, et dans lequel l'agencement avec la partie décorative (40) fixée dessus est positionné sur la monture, et dans lequel l'agencement définit un canal (48) s'étendant longitudinalement positionné immédiatement au-dessous de ladite surface de ladite bande (22) et connecté à la surface par un passage (50) s'étendant longitudinalement, et comportant l'étape d'injection du matériau collant (52) à l'intérieur d'une extrémité longitudinale du canal (48).

8. Procédé selon la revendication 7, dans lequel la monture est incurvée dans un plan s'étendant longitudinalement, et dans lequel la partie décorative (40) est fixée à la surface extérieure de la bande (22) tandis que le matériau flexible est maintenu dans une configuration incurvée de manière correspondante.

9. Procédé selon la revendication 7, dans lequel la monture est incurvée dans un plan s'étendant longitudinalement, et dans lequel l'étape consistant à positionner l'agencement, avec la partie décorative (40) fixée dessus, sur la monture comporte l'étape consistant à fléchir manuellement l'agencement et la partie décorative (40) dessus pour correspondre à ladite courbe.

10. Procédé selon la revendication 7, 8 ou 9, dans lequel le matériau collant (52) comprend un matériau en polyuréthane.

11. Procédé selon la revendication 7, 8, 9 ou 10, dans lequel le canal (48) comprend un canal s'étendant longitudinalement présentant une section transversale généralement rectangulaire mais qui est connecté à la surface extérieure par une fente ou un passage (50) plus êtroit(e) s'étendant le long de la longueur du canal s'étendant longitudinalement.
